# EUROPÄISCHE PATENTANMELDUNG

(11) **EP 1 031 275 A2**
(43) Veröffentlichungstag der Anmeldung: **30.08.2000**
(21) Anmeldenummer: 99112192.2
(22) Anmeldetag: 24.06.1999
(51) Int. Cl.: A01G 1/08

(54) **Profilelement zum Aufbau einer Begrenzung für eine Pflanzung**

(30) Priorität: 26.02.1999 DE 19908461
(71) Anmelder: Braun, Albrecht, 73340 Amstetten (DE); Braun, Wilfried, 73340 Amstetten (DE)
(72) Erfinder: Aicheler, Peter, 72070 Tübingen-Hirschau (DE)
(74) Vertreter: Popp, Eugen, Dr.

(57) **Zusammenfassung**

Die Erfindung betrifft ein Profilelement zum Aufbau einer Begrenzung für eine Pflanzung, insbesondere Beeteinfassung, die aus mehreren mit stirnseitigen Endflächen aneinander gereihten Profilelementen besteht, wobei die Profilelemente jeweils in Längsrichtung eine der Pflanzung zugekehrte Rückseite (2) und eine wenigstens teilweise sichtbare Vorderseite (3) aufweisen und jeweils aus einem Rechteckprofilabschnitt (7) sowie einem einstückig mit diesem verbundenen, vorzugsweise nach vorne gewölbten Profilabschnitt (5) bestehen, wobei der nach vorne gewölbte Profilabschnitt (5) jeweils ein etwa C- oder U-förmig ausgebildetes Dach über der Vorderseite (3) des Rechneckprofilabschnitts (7) definiert. Bei einer Ausführungsform ist an der Unterseite des C- oder U-förmig ausgebildeten Daches wenigstens ein ausgeprägter spitzdachförmiger Vorsprung (30, 31) ausgebildet.

## Beschreibung

Die Erfindung betrifft ein Profilelement zum Aufbau einer Begrenzung für eine Pflanzung nach Anspruch 1, 10, 11 oder 12.

Derartige Profilelemente, die vorzugsweise aus Beton hergestellt sind, sind bereits bekannt z.B. aus der DE 195 43 397 C1 oder der DE 296 02 221 U1. Sie dienen sowohl zur Begrenzung einer Pflanzung, insbesondere zur Herstellung einer Beeteinfassung, als auch als Amphibienleitwand, insbesondere Schneckenschutz. Nachteilig bei dem Profilelement gemäß der DE 195 43 397 C1 ist die schräg nach oben gerichtete Vorderkante, an der man sich leicht stoßen und verletzen kann. Darüber hinaus weist das bekannte Profilelement vorderseitig keinen vollständigen Überhang auf, der ein Abstürzen der Amphibien, insbesondere Schnecken, beim Versuch, das Profilelement zu überwinden, um in die dahinter gelegene Pflanzung zu gelangen, sicherstellt.

Gleiches gilt für das Profilelement gemäß der DE 296 02 221 Ul, welches primär auch die Funktion eines Ziersteins besitzt.

Die DE 296 14 548 U1 offenbart u.a. Begrenzungselemente für Gartenbeete, die ebenfalls einen Rechteckprofilabschnitt sowie einen nach vorne gewölbten Profilabschnitt umfassen, wobei der nach vorne gewölbte Profilabschnitt ein etwa U-förmig ausgebildetes Dach über der Vorderseite des Rechteckprofilabschnitts definiert. Dieses Dachprofil ist als gesondertes Bauteil vorgesehen, welches mit dem - Rechteckprofilabschnitt verbunden werden muß. Darüber hinaus sind an der Innenseite des U-förmig gewölbten Dachs gesonderte Stegelemente aus Metall vorgesehen, die Amphibien davon abhalten sollen, das Begrenzungselement vorderseitig zu überwinden. Diese bekannte Konstruktion eines Begrenzungselements ist relativ aufwendig und außerdem sehr voluminös mit der Folge, daß darunter die Ästhetik ganz erheblich leidet. Vor allem ist das bekannte Begrenzungselement sehr breit gebaut und somit nur für sehr große Gartenbeete akzeptabel.

Der vorliegenden Erfindung liegt die Aufgabe zugrunde, ein Profilelement der eingangs genannten Art zu schaffen, der einfach in der Herstellung damit als Massenprodukt geeignet ist, und der trotz vergleichsweise zierlicher Bauweise einen sicheren Amphibienschutz gewährleistet.

Diese Aufgabe wird erfindungsgemäß durch die kennzeichnenden Merkmale des Anspruches 1 gelöst.

Das erfindungsgemäße Profilelement, insbesondere in Form eines Profilsteins, zeichnet sich durch Einstückigkeit und damit auch durch relativ einfache Herstellung aus. Darüber hinaus besteht dadurch, daß der nach vorne gewölbte Profilabschnitt jeweils ein etwa C- oder U-förmig ausgebildetes Dach Über der Vorderseite des Rechteckprofilabschnitts definiert, keine Stoß- und Verletzungsgefahr mangels einer nach vorne vorstehenden Kante. Durch die Versetzung des nach vorne gewölbten Profilabschnitts nach innen bzw. hinten erhält man einen relativ schmalen und damit zierlichen Profilstein, ohne daß die Funktion eines Amphibienschutzes, insbesondere einer Schneckenwehr verlorengeht. Die Funktion des erfindungsgemäßen Profilsteins als Schneckenbarriere kann zusätzlich erhöht werden durch die Maßnahmen gemäß Anspruch 4, wonach an der Vorderseite zusätzlich ein oder mehr Längsrillen oder Längsrippen vorgesehen sind, insbesondere spitzdachartige Profilrippen. Diese Ausführungsform läßt sich ebenfalls sehr einfach herstellen, insbesondere dann, wenn die Profilsteine nach Art eines Stranggießverfahrens hergestellt werden. Alternativ kann die Vorderseite des erfindungsgemäßen Profilsteins besonders aufgerauht werden; denn es ist bekannt, daß Schnecken aufgerauhte Flächen meiden. Die gewünschte Aufrauhung kann durch Sandstrahlen der Vorderseite der Profilsteine erreicht werden, so daß die Zementschlempe abgetragen wird unter Freilegung der relativ scharfkantigen Körnung des für die Herstellung verwendeten Betons. Dabei genügt es, wenn nur eine Teilfläche derart behandelt ist, insbesondere die Innenseite bzw. nach unten offene Kanalfläche des nach vorne gewölbten Profilabschnitts oder die vordere Übergangsfläche zwischen Rechteckprofilabschnitt und nach vorne gewölbtem Profilabschnitt.

Vorzugsweise weist der nach vorne gewölbte Profilabschnitt etwa die halbe Wandstärke auf wie der Rechteckprofilabschnitt. Dadurch läßt sich die Breite des Profilsteins ganz erheblich reduzieren, ohne daß die Festigkeit und Funktion verlorengeht.

Der vorderseitige Übergang zwischen dem nach vorne gewölbten Profilabschnitt und dem Rechteckprofilabschnitt ist entweder durch eine Stufe, Schrägfläche, Parabel- oder Hyperbelfläche oder elliptisch gewölbte Fläche gebildet. Wie erwähnt, kann dieser Übergangsbereich zusätzlich oberflächenbehandelt werden, um die Überwindung für Amphibien zu erschweren. Sollte dies dennoch gelingen, würden sie spätestens von der Innenseite des nach vorne gewölbten Profilabschnitts bzw. nach unten offenen Kanals, der durch diesen Profilabschnitt gebildet wird, abstürzen.

Von ganz wesentlicher Bedeutung sind die Maßnahmen nach Anspruch 5. Diese verhindern, daß sich Schnecken an der Unterseite des nach vorne gewölbten Abschnitts innerhalb der Wölbung festsetzen und eine Brücke für ihre Artgenossen bilden.

Des weiteren sind von Bedeutung die Maßnahmen nach den Ansprüchen 6 und 7, wobei diese auch Bedeutung haben für Profilsteine herkömmlicher Art. Die erwähnten Maßnahmen sind dadurch gekennzeichnet, daß an der Vorderseite des Rechteckprofilabschnitts, insbesondere etwa auf halber Höhe desselben, ein sich über die gesamte Länge des Rechteckprofilabschnitts nach vorne erstreckender Vorsprung unter Ausbildung einer Mähkante anschließt, wobei dieser Vorsprung vorzugsweise als an der Vorderseite des Rechteckprofilabschnitts angeformte Rechteckplatte ausgebildet ist. Diese Rechteckplatte erstreckt sich so weit nach vorne, daß sie über der Vorderkante des nach vorne gewölbten Profilabschnitts vorsteht. Damit wird erreicht, daß eine Grünfläche in vorbestimmtem Abstand vor der Vorderkante des nach vorne gewölbten Profilabschnitts endet und noch genügend Platz für das Abrollen der Räder einer Mähmaschine auf der Oberseite der an der Vorderseite des Rechteckprofilabschnitts angeformten Rechteckplatte bleibt. Damit ist es möglich, die Mähmaschine längs der Vorderkante des nach vorne gewölbten Profilabschnitts zu verfahren, so daß das Gras bis zur Vorderkante der an der Vorderseite des Rechteckprofilabschnitts angeformten Rechteckplatte gemäht wird. Gleichzeitig fördert die an der Vorderseite des Rechteckprofilabschnitts angeformte Rechteckplatte die Stabilität des Profilsteins im Erdreich. Vorzugsweise erfolgt die Montage der Profilsteine unter Verwendung eines Montagebalkens, der im Bereich zwischen der Unterseite des an der Vorderseite des Rechteckprofilabschnitts angeschlossenen Vorsprungs und der Vorderseite des unterhalb des Vorsprungs liegenden Teils des Rechteckprofilabschnitts einfügbar ist. Insbesondere handelt es sich dabei um einen Betonbalken mit quadratischem oder rechteckförmigem Querschnitt. Auf diese Weise erhält man eine optimale und präzise Verankerung der erfindungsgemäßen Profilsteine im Erdreich.

Weitere Lösungsvorschläge nach der Erfindung ergeben sich aus den Ansprüchen 10, 11 und 12, und den sich daran anschließenden Unteransprüchen.

Demnach ist bei der Konstruktion nach Anspruch 10 ein wesentliches Merkmal, daß sich an der Unterseite des vorzugsweise C- oder U-förmig ausgebildeten Daches wenigstens ein, bevorzugt zwei ausgeprägte spitzdachförmige Vorsprünge befinden.

Umfangreiche Versuche haben ergeben, daß insbesondere bei einem sehr stark ausgeprägten Profil des spitzdachförmigen Vorsprungs ein sehr hoher Schutz gegen das Eindringen von Schnecken gewährleistet wird.

Als allgemein bekannt gilt, daß Schnecken nicht über Bürsten kriechen können, da diese sehr stark die Feuchtigkeitsbildung der Tiere beeinflussen.

Eine alternative Lösung der genannten Aufgabe basiert auf dieser Erkenntnis. Erfindungsgemäß ist demnach bei diesem Lösungsvorschlag an der Unterseite des etwa C- oder U-förmig ausgebildeten Daches ein - vorzugsweise einsetzbares und damit auch austauschbares - Bürstenelement angeordnet, welches sich bis zu den stirnseitigen Endflächen des Profilelements hin, d.h. über dessen gesamte Länge erstreckt.

Diese Konstruktion bietet den besonderen Vorteil, daß die Bürstenelemente nach Aufstellen bzw. Einsetzen der Profilelemente ins Erdreich bequem nachträglich eingefügt und ggf. auch durch neue Bürstenelemente ersetzt werden können.

Eine besonders vorteilhafte Ausgestaltung der Erfindung besteht ferner darin, daß bei allen alternativen Ausführungsformen das Profilelement aus Kunststoff besteht, so daß ein derartiges Profilelement einfach hergestellt werden kann und auch ein vergleichsweise geringes Gewicht besitzt, so daß es sich als Mitnahmeartikel besonders gut eignet.

Das Einsetzen des aus Kunststoff bestehenden Profilelements in das Erdreich wird dadurch besonders vereinfacht, daß sich der Rechteckprofilabschnitt an seinem unteren Endbereich zu einer unteren scharfen Kante hin verjüngt, und daß an der Oberseite eine Schlagfläche ausgebildet ist.

Dadurch kann das Profilelement schnell und problemlos in die gewünschte Lage gebracht werden; und auch im eingesetzten Zustand kann die Position des Profilelements korrigiert werden.

Im folgenden wird die Erfindung anhand von Ausführungsbeispielen unter Hinweis auf die Zeichnungen näher erläutert. Es zeigen:
- Fig. 1: einen erfindungsgemäß ausgebildeten Profilstein in Stirnansicht;
- Fig. 2: einen im Erdreich plazierten Profilstein gemäß Fig. 1;
- Fig. 3: den Profilstein gemäß Fig. 2 unter Darstellung der Zuordnung zu einem Rasenmäher;
- Fig. 4a-4d: die Plazierung eines erfindungsgemäßen Profil steins unter Verwendung eines zugeordneten Montagebalkens im Erdreich.
- Fig. 5: ein erfindungsgemäß ausgebildetes Profilelement in Stirnansicht;
- Fig. 6: eine alternative Ausführungsform des erfindungsgemäßen Profilelements ebenfalls in Stirnansicht;
- Fig. 7: eine Stirnansicht in gebrochener Darstellung eines oberen Endabschnitts einer noch weiteren alternativen Ausführungsform nach der Erfindung; und
- Fig. 8: eine Stirnansicht in gebrochener Darstellung eines oberen Endabschnitts einer weiteren alternativen Ausführungsform eines Profilelements nach der Erfindung.

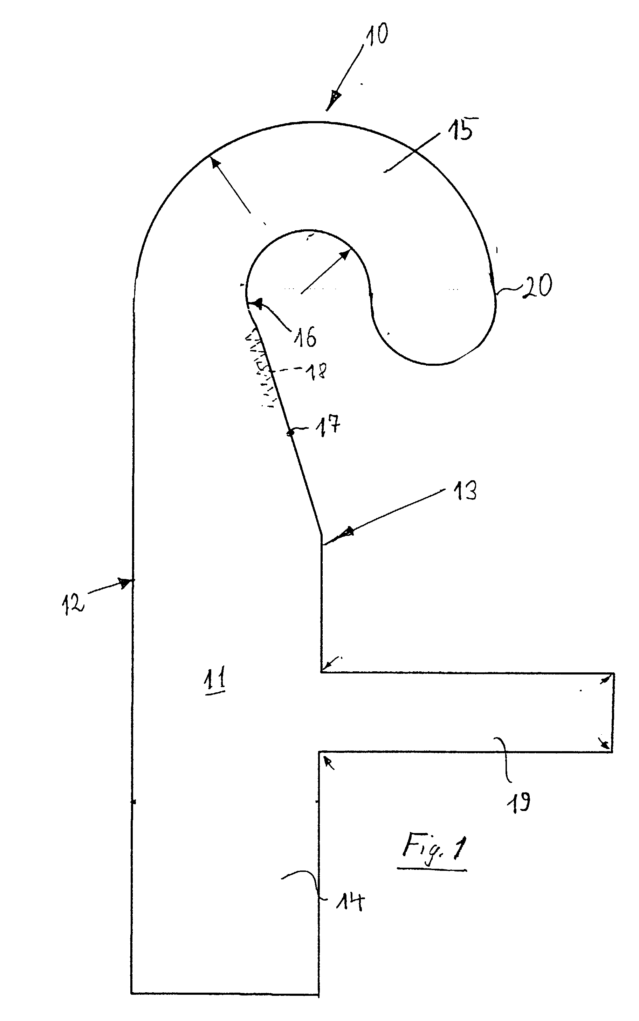

Der Profilstein 10 gemäß Fig. 1 dient zum Aufbau einer Begrenzung für eine Pflanzung, insbesondere Beeteinfassung, die aus mehreren mit ihren stirnseitigen Endflächen 11 aneinandergereihten Profilsteinen dieser Art besteht. Die Profilsteine 10 weisen jeweils in Längsrichtung eine der Pflanzung zugekehrte Rückseite 12 und eine wenigstens teilweise sichtbare Vorderseite 13 auf. Des weiteren bestehen die Profilsteine der hier fraglichen Art jeweils aus einem unteren Rechteckprofilabschnitt 14 sowie einem einstückig mit diesem verbundenen oberen und nach vorne gewölbten Profilabschnitt 15, wobei dieser ein U-förmig ausgebildetes, einen nach unten offenen Kanal begrenzendes Dach über der Vorderseite 13 des Rechteckprofilabschnitts 14 definiert. Der vorderseitige Ansatz des nach vorne gewölbten Profilabschnitts 15 am Rechteckprofilabschnitt 14 ist gegenüber dessen Vorderseite um etwa 1/4 bis 1/2, hier etwa 1/3 seiner Breite nach innen bzw. zur Rückseite 12 des Profilsteins versetzt. Dadurch erhält man eine relativ schmale Gesamtbreite des Profilsteins, ohne daß die oben beschriebene Funktion desselben verlorengeht.

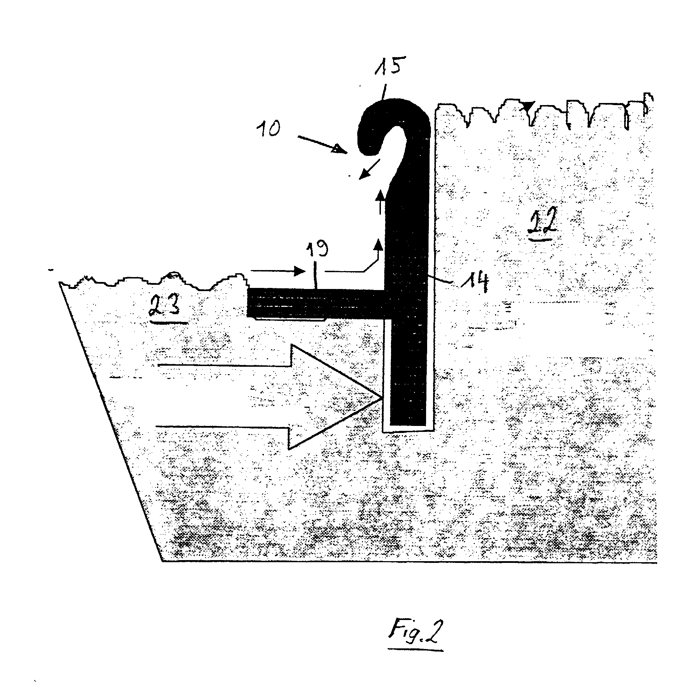

Die nach unten ragende Kante des nach vorne gewölbten Profilabschnitts 15 ist ebenfalls abgerundet, und zwar etwa kreisbogenförmig. Sowohl die Innenseite als auch die Oberseite des nach vorne gewölbten Profilabschnitts 15 sind ebenfalls durch Kreisbögen definiert. Auf diese Weise werden Kanten vermieden, an denen man sich verletzen könnte. Die untere Hälfte des Profilsteins 10 dient zur Verankerung im Erdreich, wie anhand der Fig. 2 bis 4d dargestellt ist. Die obere Hälfte dient rückseitig zur Begrenzung einer nicht dargestellten Pflanzung und vorderseitig als Barriere gegen Amphibien, insbesondere Schnecken. Die Vorderseite der oberen Hälfte des Profilsteins 10 ist ebenso sichtbar wie die Oberseite des nach vorne gewölbten Profilabschnitts 15.

Fig. 1 läßt des weiteren erkennen, daß der nach vorne gewölbte Profilabschnitt 15 etwa die halbe Wandstärke aufweist wie der Rechteckprofilabschnitt 14. Auch dies trägt zur schmalen Bauweise des Profilsteins 10 bei.

Vorderseitig ist bei der dargestellten Ausführungsform der Übergang zwischen dem nach vorne gewölbten Profilabschnitt 15 und dem Rechteckprofilabschnitt 14 durch eine Schrägfläche 17 definiert, die zusätzlich behandelt sein kann, um das Überwinden durch Amphibien zu erschweren. Insbesondere ist es denkbar, daß diese Übergangsfläche 17 wenigstens eine, insbesondere zwei oder mehr Längsrillen oder Längsrippen, insbesondere spitzdachartige Profilrippen umfaßt. Ein derartiges Profil ist in Fig. 1 mit der Bezugsziffer 18 angedeutet.

An der Vorderseite des Rechteckprofilabschnitts 14, und zwar etwa auf halber Höhe desselben schließt ein sich über die gesamte Länge des Rechteckprofilabschnitts nach vorne erstrekkender Vorsprung in Form einer Rechteckplatte 19 an. Diese ist mit dem Rechteckprofilabschnitt 14 einstückig verbunden bzw. an diesem angeformt. Bei dieser Gelegenheit sei darauf hingewiesen, daß der Profilstein 10 vorzugsweise aus Beton hergestellt ist. Es ist auch denkbar, ihn aus Kunststoff oder Kunststoffbeton zu fertigen.

Die Rechteckplatte 19 weist eine Tiefe auf, die etwa der halben Höhe des Rechteckprofilabschnitts 14 entspricht, insbesondere jedoch so bemessen ist, daß sie nach vorne über der Vorderkante 20 des nach vorne gewölbten Profilabschnitts 15 vorsteht, und zwar so weit, daß genügend Platz für das Abrollen der Räder eines Rasenmähers auf der Oberseite der Rechteckplatte 19 vorhanden ist, wobei dafür entscheidend ist der Abstand zwischen der Vorderkante der Rechteckplatte 19 und der Projektion der Vorderkante 20 des nach vorne gewölbten Profilabschnitts 15 auf der Oberseite der Rechteckplatte 19.

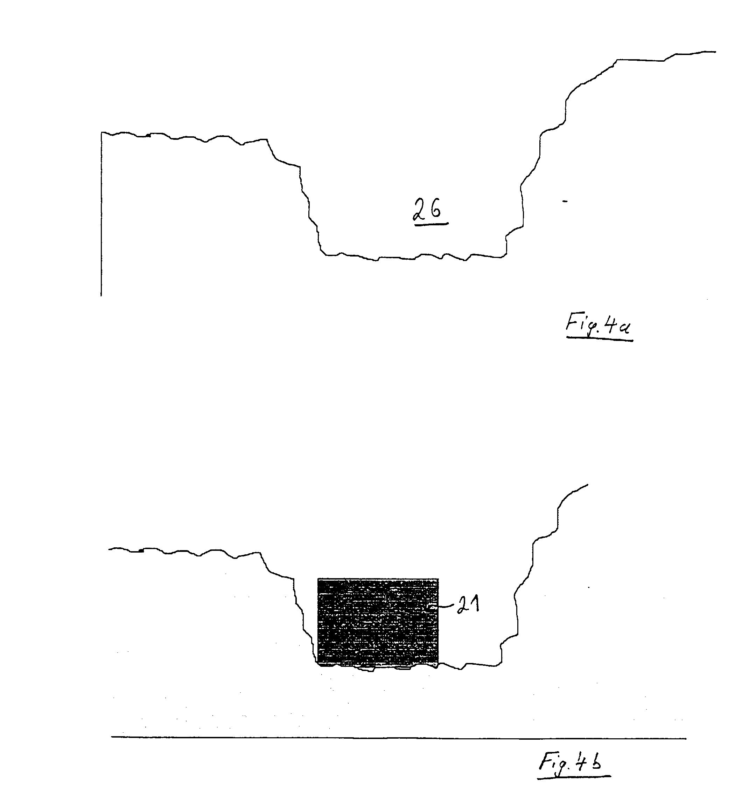

Im Bereich zwischen der Unterseite der an der Vorderseite des Rechteckprofilabschnitts 14 angeschlossenen Vorsprungs bzw. der Rechteckplatte 19 und der Vorderseite des unterhalb der Rechteckplatte 19 liegenden Teils des Rechteckprofilabschnitts 14 soll ein Montagebalken, insbesondere Betonbalken 21 mit quadratischem oder rechteckförmigem Querschnitt einfügbar sein. Dieser Montagebalken dient zur Ausrichtung und Stabilisierung der Profilsteine im Erdreich, wie anhand der Fig. 4a bis 4d noch näher erklärt wird.

Darüber hinaus sei noch darauf hingewiesen, daß der untere Teil des Rechteckprofilabschnitts, d.h. der sich unterhalb der Rechteckplatte 19 befindliche Teil des Rechteckprofilabschnitts 14 als Maulwurf- oder Mäusebarriere dient bzw. vorteilhaft ist. Damit wird verhindert, daß Mäuse oder Maulwürfe von unten her sich in den Pflanzbereich hineingraben.

Bei einer beispielhaften Ausführungsform besitzt das Profilelement oder der Profilstein 10 eine Höhe von etwa 300 mm. Der Rechteckabschnitt hat eine maximale Breite von etwa 50 mm. Die Breite der Rechteckplatte 19 beträgt etwa 40 mm. Der sich unterhalb der Rechteckplatte befindliche Teil des Rechteckprofilabschnitts 14 besitzt eine Höhe von etwa 95 mm. Die Tiefe der Rechteckplatte 19 beträgt ebenfalls etwa 95 mm. Die Breite des etwa halbkreisförmig nach vorne gewölbten Profilabschnitts 15 beträgt 25 bis 30 mm. Der die Innenseite begrenzende Kreisbogen des nach vorne gewölbten Profilabschnitts besitzt einen Radius von etwa 15 mm. Der die obere bzw. Außenseite des nach vorne gewölbten Profilabschnitts 15 begrenzende Kreisbogen hat einen Radius von etwa 45 mm. Die Breite des nach vorne gewölbten Profilabschnitts beträgt etwa 90 mm. Die hier genannten Dimensionen sind nur beispielhaft. Sie lassen jedoch eine gewisse Relation zwischen den einzelnen Abschnitten erkennen, die verhältnismäßig auch für andere Größenordnungen Gültigkeit haben soll.

In Fig. 2 ist die Plazierung eines erfindungsgemäß ausgebildeten und anhand der Fig. 1 beschriebenen Profilelements oder Profilsteins 10 im Erdreich dargestellt. Die an die Rückseite der Profilsteine 10 anschließende Pflanzung ist mit der Bezugsziffer 22 gekennzeichnet. Vorderseitig schließt an den Profilstein 10 z.B. eine Grünfläche 23 an. Diese erstreckt sich bis zur Vorderkante der Rechteckplatte 19. Die in Fig. 2 dargestellten Pfeile stellen den Weg einer Schnecke dar, die versucht, den Profilstein 10 vorderseitig zu überwinden, um in den Pflanzbereich 22 zu gelangen. Spätestens im Bereich des durch den nach vorne gewölbten Profilabschnitt 15 gebildeten nach unten offenen Kanals stürzt die Schnecke ab.

In Fig. 2 ist auch der Teilschutz gegen Maulwürfe oder dergleichen durch den unteren, sich im Erdreich befindlichen Teil des Rechteckprofilabschnitts 14 angedeutet.

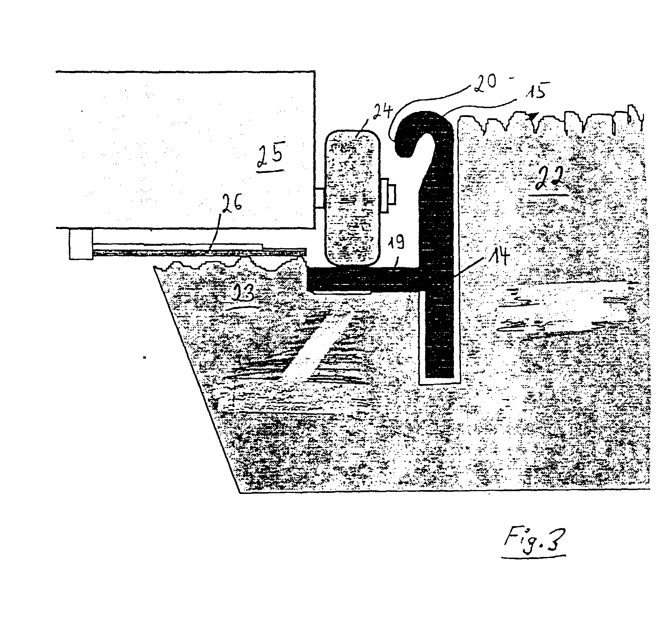

In Fig. 3 ist die Funktion der an der Vorderseite des Rechteckprofilabschnitts 14 angeformten Rechteckplatte 19 dargestellt, nämlich zum Abrollen der Laufräder 24 eines Rasenmähers 25. Die Rechteckplatte 19 steht so weit gegenüber der Vorderkante 20 des nach vorne gewölbten Profilabschnitts 15 vor, daß das Messer 26 des Rasenmähers 25 bis an die Vorderkante der Rechteckplatte 19 reicht, so daß das Gras bis zu dieser Vorderkante hin gemäht werden kann.

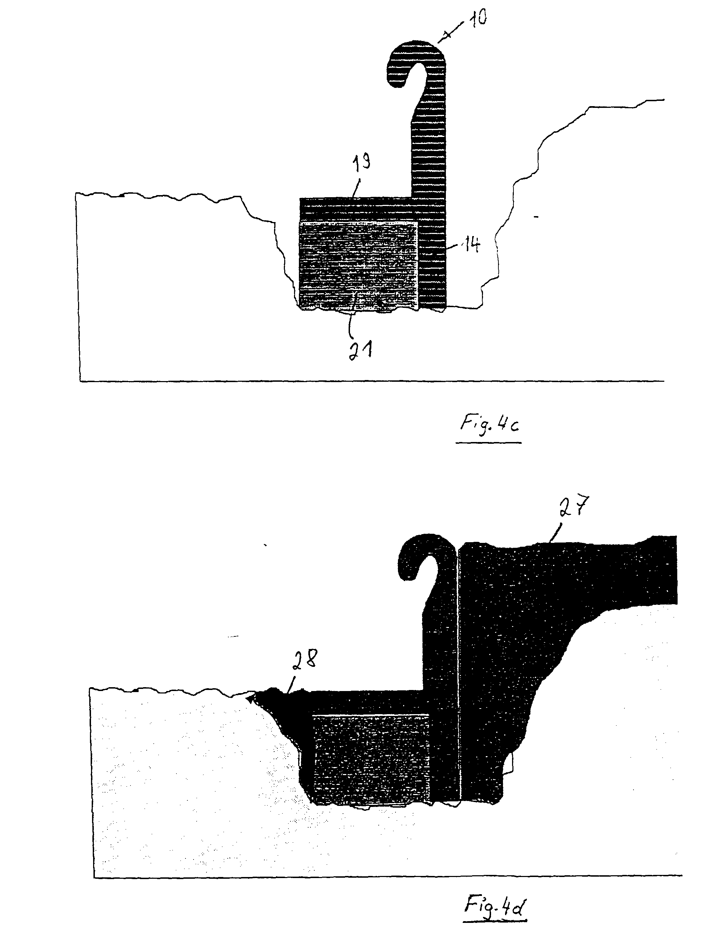

In den Fig. 4a bis 4d ist dargestellt, wie die Profilelemente oder Profilsteine 10 gemäß der Erfindung im Erdreich plaziert werden. Zunächst wird gemäß Fig. 4a ein Graben 26 ausgehoben. In diesen Graben 26 wird ein Montagebalken, nämlich Betonbalken 21 plaziert (Fig. 4b). Anschließend wird entsprechend Fig. 4c auf den Montagebalken 21 der Profilstein 10 gehängt dergestalt, daß sich der Montagebalken 21 im Bereich zwischen der Unterseite der Rechteckplatte 19 und der Vorderseite des unteren Teils des Rechteckprofilabschnitts 14 befindet. Anschließend wird entsprechend Fig. 4d Erde sowohl hinten als auch vorne angefüllt und leicht verdichtet. Diese Anfüllung ist in Fig. 4d mit den Bezugsziffern 27 und 28 gekennzeichnet.

Innen- und Außenecken der durch die Profilsteine 10 gebildeten Begrenzung werden mit einer Steinschneidsäge auf Gehrung gesägt, so daß auch Über Eck Profilsteine der hier fraglichen Art aneinandergefügt werden können.

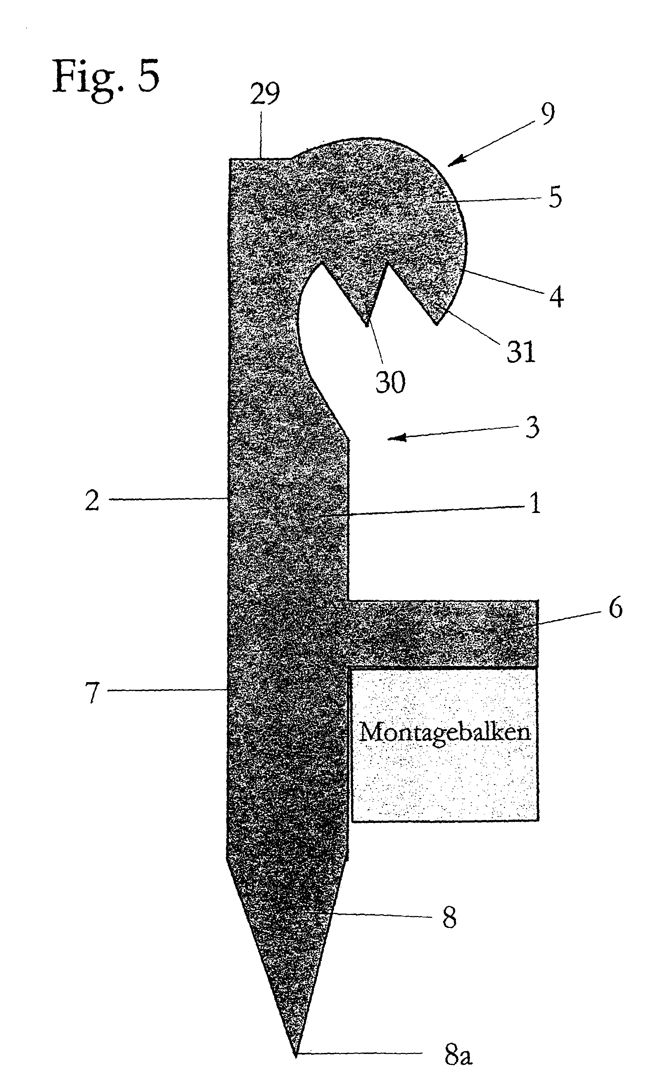

Das Profilelement 9 gemäß Fig. 5 dient zum Aufbau einer Begrenzung für eine Pflanzung, insbesondere Beeteinfassung, die aus mehreren mit ihren stirnseitigen Endflächen 1 aneinander gereihten Profilelementen dieser Art besteht. Die Profilelemente 9 weisen jeweils in Längsrichtung eine der Pflanzung zugekehrte Rückseite 2 und eine wenigstens teilweise sichtbare Vorderseite 3 auf. Des weiteren bestehen die Profilelemente der dargestellten Art jeweils aus einem unteren Rechteck-profilabschnitt 7, der ein unteres sich allmählich verjüngendes Ende 8 aufweist, welches in einer unteren relativ scharfen Kante 8a endet. Ferner besteht das Profilelement aus einem einstückig mit diesem verbundenen oberen und nach vorne gewölbten Profilabschnitt 5, wobei dieser ein U-förmig ausgebildetes, einen nach unten offenen Kanal begrenzendes Dach über der Vorderseite 3 des Rechteckprofilabschnitts 7 definiert. Der vorderseitige Ansatz des nach vorne gewölbten Profilabschnitts 5 am Rechteckprofilabschnitt 7 kann gegenüber dessen Vorderseite um etwa ¼ bis ½ seiner Breite nach innen bzw. zur Rückseite 2 des Profilelements hin versetzt sein. Dadurch erhält man eine relativ schmale Gesamtbreite des Profilelements, ohne daß die angestrebten Funktionen desselben verloren gehen.

Bei der Ausführungsform nach Fig.5 sind an der Unterseite des dachartig nach vorne gewölbten Profilabschnitts 5 zwei sich über dessen gesamte Länge erstreckende spitzdachförmige Vorsprünge 30 und 31 ausgebildet. Umfangreiche Versuche haben ergeben, daß durch diese Maßnahme Schnecken sehr wirksam daran gehindert werden, diesen Bereich zu überqueren.

Darüber hinaus besitzt das in Fig. 5 gezeigte Profilelement eine sich am oberen Ende der Rückseite 2 an dieses anschließende horizontale Schlagfläche 29, so daß es in einfacher Weise mit einem Hammer in das Erdreich eingeschlagen werden kann, wobei der untere sich verjüngende Abschnitt 8 mit der unteren Kante 8a diesen Vorgang begünstigt.

Das gezeigte Profilelement 9 kann aus Kunststoff gefertigt sein, so daß es sich als leichtgewichtiger Mitnahmeartikel in Baumärkten oder dergleichen eignet.

An der Vorderseite des Rechteckprofilabschnitts 7, und zwar etwa auf halber Höhe desselben, schließt sich ein über die gesamte Länge des Rechteckprofilabschnitts nach vorne erstreckender Vorsprung in Form einer Rechteckplatte 6 an. Diese ist mit dem Rechteckprofilabschnitt 7 einstückig verbunden bzw. an diesen angeformt. Das Profilelement als auch die Rechteckplatte 6 sind in bevorzugter Weise aus Kunststoff hergestellt.

Die nachstehend beschriebenen Merkmale wurden bereits im Zusammenhang mit der Ausführungsform gemäß den Fig. 1 bis 4d erläutert. Sie sollen hier jedoch rein vorsorglich wiederholt werden, um deutlich zu machen, daß es sich dabei auch um bevorzugte Maßnahmen der Ausführungsform gemäß Fig. 5 handelt.

Die erwähnte Rechteckplatte 6 weist also eine Tiefe auf, die etwa der halben Höhe des Rechteckprofilabschnitts 7 entspricht, insbesondere jedoch so bemessen ist, daß sie nach vorne über die Vorderkante des nach vorne gewölbten Profilabschnitts 5 vorsteht und zwar so weit, daß genügend Platz für das Abrollen der Räder eines Rasenmähers auf der Oberseite der Rechteckplatte 6 vorhanden ist, wobei der Abstand zwischen der Vorderkante der Rechteckplatte 6 und der Projektion der Vorderkante 4 des nach vorne gewölbten Profilabschnitts 5 auf die Oberseite der Rechteckplatte 6 dafür entscheidend ist.

Im Bereich zwischen der Unterseite des an der Vorderseite des Rechteckprofilabschnitts 7 angeschlossenen Vorsprungs bzw. der Rechteckplatte 6 und der Vorderseite des unterhalb der Rechteckplatte 6 liegenden Teils des Rechteckprofilabschnitts 7 kann ein Montagebalken, insbesondere Betonbalken oder Kunststoffbalken mit quadratischem oder rechteckförmigem Querschnitt einfügbar sein. Dieser Montagebalken dient zur Ausrichtung und Stabilisierung der Profilelemente im Erdreich.

Darüber hinaus dient der untere Teil des Rechteckprofilabschnitts, d.h. der sich unterhalb der Rechteckplatte 6 befindliche Teil des Rechteckprofilabschnitts 7 als Maulwurf- oder Mäusebarriere. Es wird damit verhindert, daß Mäuse oder Maulwürfe von unten her sich in den Pflanzenbereich hineingraben.

Bei einer beispielhaften Ausführungsform besitzt das Profilelement 9 eine Höhe von etwa 300 mm. Der Rechteckabschnitt hat eine maximale Breite von etwa 30 mm. Die Breite der Rechteckplatte 6 beträgt etwa 10 - 20 mm. Der sich unterhalb der Rechteckplatte befindliche Teil des Rechteckprofilabschnitts 7 besitzt eine Höhe von etwa 95 mm. Die Tiefe der Rechteckplatte 6 beträgt ebenfalls etwa 95 mm. Die Breite des etwa halbkreisförmig nach vorne gewölbten Profilabschnitts 5 beträgt 15 bis 20 mm.

Die Breite des nach vorne gewölbten Profilabschnitts beträgt etwa 60 mm. Die hier genannten Dimensionen sind nur beispielhaft. Sie lassen jedoch eine gewisse Relation zwischen den einzelnen Abschnitten erkennen, die verhältnismäßig auch für andere Größenordnungen Gültigkeit haben soll.

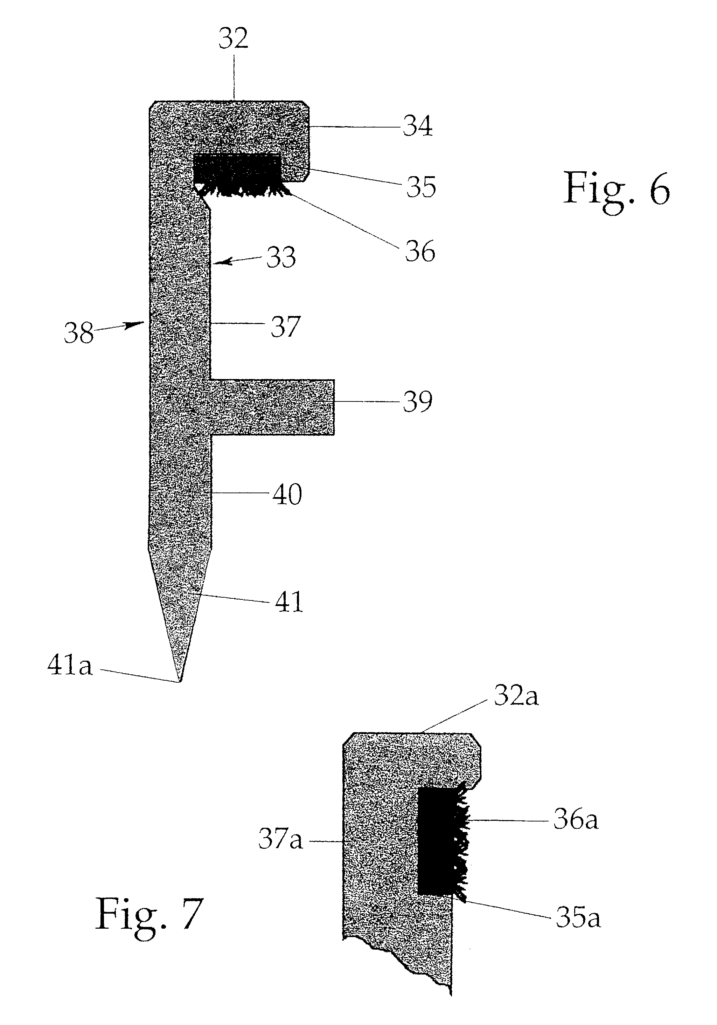

In Fig. 6 ist eine weitere Ausführungsform eines erfindungsgemäßen Profilelements in Stirnansicht dargestellt. Der untere Abschnitt dieses Profilelements entspricht vollständig dem entsprechenden Abschnitt bei der Ausführungsform nach Fig. 5. Die Ausführungsform nach Fig. 6 besitzt somit eine Rückfläche 38, einen Rechteck-Profilabschnitt 40 und ein unteres sich keilförmig verjüngendes Ende 41, welches in einer unteren Schneidkante 41a endet. Ferner besitzt die Ausführungsform nach Fig. 6 ebenfalls eine sich nach vorne erstreckende Rechteckplatte 39, die der Rechteckplatte 6 bei der Ausführungsform nach Fig. 5 entspricht. Auch bei dem Profilelement nach Fig. 6 ist die Vorderseite 37 im montierten Zustand wenigstens teilweise sichtbar.

Die Ausführungsform nach Fig. 6 unterscheidet sich von derjenigen nach Fig. 5 dadurch, daß der obere Endabschnitt anders ausgeführt ist. Der obere Endabschnitt hat eine im Querschnitt etwa hakenförmige Gestalt mit einer oberen Horizontalfläche 32, die als Schlagfläche dienen kann. An der Unterseite des hakenförmigen Abschnitts ist eine im Querschnitt etwa rechteckförmige Ausnehmung 35 ausgebildet, in die ein Bürstenelement 36 eingesetzt ist, das sich über die gesamte Länge des Profilelements erstreckt.

Ein Ausschnitt einer weiteren Ausführungsform mit Bürstenelement ist in Fig. 7 gezeigt. Bei dieser ist der untere Abschnitt etwa so ausgebildet wie bei der Ausführungsform nach Fig. 5 oder nach Fig. 6. Der obere Endabschnitt besitzt hier jedoch eine etwa rechteckförmige Gestalt mit einem oberen Abschluß 32a, der ebenfalls eine ebene Schlagfläche definiert. Der gezeigte Endabschnitt 37a weist vorderseitig an seinem oberen Ende eine etwa rechteckförmige Ausnehmung 35a auf, in die ein sich über die gesamte Länge des Profilelements erstreckendes Bürstenelement 36a eingefügt ist.

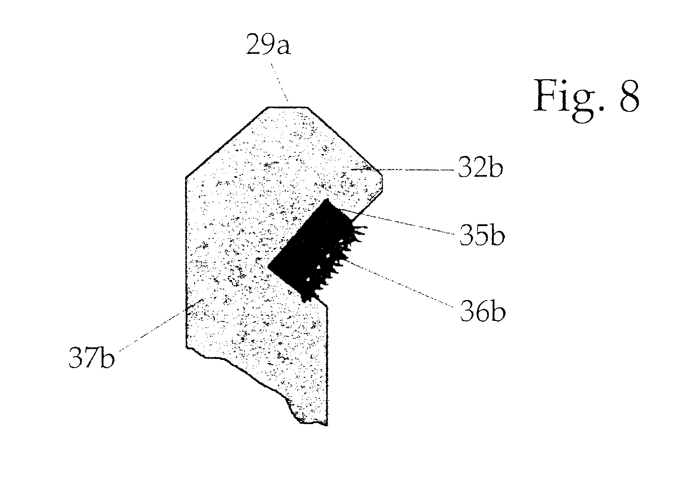

Bei einer abgewandelten Ausführungsform gemäß Fig. 8 ist das obere Ende des Profilelements trapezdachförmig mit einer ebenen Schlagfläche 29a und einem sich schräg nach vorne erstreckenden Abschnitt 32b gestaltet. Unterhalb dieses "Trapezdaches" ist an der Vorderseite des Profilelements eine etwa rechteckförmige Ausnehmung 35b ausgebildet, in die ein Bürstenelement 36b eingefügt ist, das sich ebenfalls über die gesamte Länge des Profilelements erstreckt. Die Bürste ist bei der Ausführungsform etwas nach unten zur Vorder- bzw. Sichtseite des Profilelements hin geneigt und vom Betrachter kaum wahrnehmbar.

Es wird darauf hingewiesen, daß sämtliche Ausführungsformen gemäß den Figuren 5 bis 8 sowohl aus Beton als auch aus Kunststoff hergestellt werden können, wobei sich bei dem letztgenannten Material der besondere Vorteil ergibt, daß die Profilelemente mit geringer Wandstärke gefertigt und damit als leichtgewichtiger Mitnahmeartikel angeboten werden können.

Es versteht sich von selbst, daß auch die Ausführungsformen gemäß der Fig. 7 und 8 mit dem in Verbindung mit Fig. 1 und Fig. 5 erläuterten Montagebalken kombiniert werden können, um eine stabile dauerhafte Verankerung im Erdreich zu gewährleisten.

Zur Herstellung eines Eckbereiches einer Beeteinfassung bietet es sich an, die Profilelemente auf Gehrung zu schneiden, vorzugsweise mit einem Gehrungswinkel von 45°. Auch ist es denkbar, gesonderte Eckprofilelemente herzustellen, die sich über einen Winkel von 90° oder nur 45° erstrekken und an die die oberen beschriebenen plattenartigen Profilelemente anschließbar sind zur Ausbildung der gewünschten Beeteinfassung.

Sämtliche in den Anmeldungsunterlagen offenbarten Merkmale werden als erfindungswesentlich beansprucht, soweit sie einzeln oder in Kombination gegenüber dem Stand der Technik neu sind.

## Patentansprüche

1. Profilelement, insbesondere Profilstein zum Aufbau einer Begrenzung für eine Pflanzung, insbesondere Beeteinfassung, die aus mehreren mit stirnseitigen Endflächen (11) aneinandergereihten Profilsteinen (10) besteht, wobei die Profilsteine (10) jeweils in Längsrichtung eine der Pflanzung zugekehrte Rückseite (12) und eine wenigstens teilweise sichtbare Vorderseite (13) aufweisen und jeweils aus einem Rechteckprofilabschnitt (14) sowie einem einstückig mit diesem verbundenen, nach vorne gewölbten Profilabschnitt (15) bestehen,
**dadurch gekennzeichnet, daß** der nach vorne gewölbte Profilabschnitt jeweils ein etwa C- oder U-förmig ausgebildetes Dach über der Vorderseite (13) des Rechteckprofilabschnitts (14) definiert, wobei der vorderseitige Ansatz (16) des nach vorne gewölbten Profilabschnitts (15) am Rechteckprofilabschnitt (14) gegenüber dessen Vorderseite um etwa 1/4 bis 1/2 seiner Breite nach innen bzw. zur Rückseite (12) des Profilsteins (10) hin versetzt ist.

2. Profilelementnach Anspruch 1, dadurch gekennzeichnet, daß der nach vorne gewölbte Profilabschnitt (15) etwa die halbe Wandstärke aufweist wie der Rechteckprofilabschnitt (14).

3. Profilelement nach Anspruch 1 oder 2, dadurch gekennzeichnet, daß vorderseitig der Übergang zwischen dem nach vorne gewölbten Profilabschnitt (15) und dem Rechteckprofilabschnitt (14) durch eine Stufe, Schrägfläche (17), Parabel- oder Hyperbelfläche oder elliptisch gewölbte Fläche gebildet ist.

4. Profilelement nach Anspruch 3, dadurch gekennzeichnet, daß die Übergangsfläche (z.B. Schrägfläche 17) wenigstens eine, insbesondere zwei oder mehr Längsrillen oder -rippen, insbesondere spitzdachartige Profilrippen (18) umfaßt.

5. Profilelement nach einem der Ansprüche 1 bis 4, dadurch gekennzeichnet, daß an der Unterseite des nach vorne gewölbten Profilabschnitts wenigstens ein, insbesondere zwei spitzdachförmige Vorsprünge (30,31) ausgebildet sind.

6. Profilelement, insbesondere nach einem der Ansprüche 1 bis 5, dadurch gekennzeichnet, daß sich an der Vorderseite des Rechteckprofilabschnitts (14), insbesondere etwa auf halber Höhe desselben ein sich über die gesamte Länge des Rechteckprofilabschnitts nach vorne erstreckender Vorsprung unter Ausbildung einer Mähkante anschließt.

7. Profilelement nach Anspruch 6, dadurch gekennzeichnet, daß der eine Mähkante definierende Vorsprung als eine an der Vorderseite des Rechteckprofilabschnitts (14) angeformte Rechteckplatte (19) ausgebildet ist.

8. Profilelement nach Anspruch 6 oder 7, dadurch gekennzeichnet, daß der an der Vorderseite des Rechteckprofilabschnitts (14) anschließende Vorsprung (Rechteckplatte 19) eine Tiefe aufweist, die etwa der halben Höhe des Rechteckprofilabschnitts (14) entspricht, insbesondere so bemessen ist, daß sie nach vorne über die Vorderkante (20) des nach vorne gewölbten Profilabschnitts (15) vorsteht.

9. Profilelement nach einem der Ansprüche 1 bis 8, dadurch gekennzeichnet, daß im Bereich zwischen der Unterseite des an der Vorderseite des Rechteckprofilabschnitts (14) angeschlossenen Vorsprungs (19) und der Vorderseite des unterhalb des Vorsprungs liegenden Teils des Rechteckprofilabschnitts (14) ein Montagebalken, insbesondere Betonbalken (21) mit quadratischem oder rechteckförmigem Querschnitt einfügbar ist.

10. Profilelement zum Aufbau einer Begrenzung für eine Pflanzung, insbesondere Beeteinfassung, die aus mehreren mit stirnseitigen Endflächen aneinander gereihten Profilelementen (9) besteht, wobei die Profilelemente (9) jeweils in Längsrichtung eine der Pflanzung zugekehrte Rückseite (2) und eine wenigstens teilweise sichtbare Vorderseite (1) aufweisen und jeweils aus einem Rechteckprofilabschnitt (7) sowie einem einstückig mit diesem verbundenen, nach vorne gewölbten Profilabschnitt (4, 5) bestehen, wobei der nach vorne gewölbte Profilabschnitt jeweils ein etwa C- oder U-förmig ausgebildetes Dach über der Vorderseite (1) des Rechteckprofilabschnitts (7) definiert, an dessen Unterseite wenigstens ein, insbesondere zwei ausgeprägte spitzdachförmige Vorsprünge (30,31) ausgebildet sind.

11. Profilelement zum Aufbau einer Begrenzung für eine Pflanzung, insbesondere Beeteinfassung, die aus mehreren mit stirnseitigen Endflächen aneinander gereihten Profilelementen (33) besteht, wobei die Profilelemente (33) jeweils in Längsrichtung eine der Pflanzung zugekehrte Rückseite (38) und eine wenigstens teilweise sichtbare Vorderseite (37) aufweisen und jeweils aus einem Rechteckprofilabschnitt (40) sowie einem einstückig mit diesem verbundenen, nach vorne gewölbten Profilabschnitt (34) bestehen, wobei der nach vorne gewölbte Profilabschnitt (34) jeweils ein etwa C-förmig ausgebildetes Dach über der Vorderseite (37) des Rechteckprofilabschnitts (40) definiert, und wobei an der Unterseite des C-förmig ausgebildeten Daches ein - vorzugsweise einsetz- und damit auch austauschbares - Bürstenelement (29) angeordnet ist, welches sich bis zu den stirnseitigen Endflächen des Profilelements hin erstreckt.

12. Profilelement zum Aufbau einer Begrenzung für eine Pflanzung, insbesondere Beeteinfassung, die aus mehreren mit stirnseitigen Endflächen aneinander gereihten plattenförmigen Profilelementen besteht, wobei die Profilelemente jeweils in Längsrichtung eine der Pflanzung zugekehrte Rückseite (37a) und eine wenigstens teilweise sichtbare Vorderseite aufweisen, wobei am oberen Ende der Vorderseite ein sich über die gesamte Länge des Profilelements erstreckendes Bürstenelement (29a) angeordnet ist.

13. Profilelement nach einem der Ansprüche 1 bis 12, dadurch gekennzeichnet, daß die Unterseite des Rechteckprofilabschnitts (7; 27) als Längsteil (8;28) mit einer schneidenartigen Kante (8a; 28a) ausgebildet ist.

14. Profilelement nach einem der Ansprüche 10 bis 13, dadurch gekennzeichnet, daß an der Vorderseite (1; 21) des Rechteckprofilabschnitts (7; 27), insbesondere etwa auf halber Höhe desselben ein sich über die gesamte Länge des Rechteckprofilabschnitts nach vorne erstreckender Vorsprung (6, 26) unter Ausbildung einer Mähkante anschließt.

15. Profilelement nach Anspruch 14, dadurch gekennzeichnet, daß der eine Mähkante definierende Vorsprung als eine an der Vorderseite des Rechteckprofilabschnitts (7; 40) angeformte Rechteckplatte (6; 39) ausgebildet ist.

16. Profilelement nach einem der Ansprüche 10, bis 15, dadurch gekennzeichnet, daß der an der Vorderseite des Rechteckprofilabschnitts (7; 40) anschließende Vorsprung (Rechteckplatte 6; 39) eine Tiefe aufweist, die etwa der halben Höhe des Rechteckprofilabschnitts (7; 40) entspricht und insbesondere so bemessen ist, daß sie nach vorne über die Vorderkante (4; 34) des nach vorne gewölbten Profilabschnitts vorsteht.

17. Profilelement nach einem der vorhergehenden Ansprüche, dadurch gekennzeichnet, daß das Profilelement (9; 33) aus Kunststoff besteht.

18. Profilelement nach einem der vorhergehenden Ansprüche, dadurch gekennzeichnet, daß an der Oberseite des Profilelements (9; 23) eine sich horizontal erstreckende ebene Schlagfläche (29; 32; 32a; 29a) für ein Einschlagwerkzeug ausgebildet ist.

19. Profilelement nach einem der Ansprüche 10 bis 18, dadurch gekennzeichnet, daß im Bereich zwischen der Unterseite des an der Vorderseite des Rechteckprofilabschnitts (7;40) angeschlossenen Vorsprungs (6; 39) und der Vorderseite des unterhalb des Vorsprungs liegenden Teils des Rechteckprofilabschnitts (7; 40) ein Montagebalken, insbesondere Kunststoff- oder Betonbalken mit quadratischem oder rechteckförmigen Querschnitt einfügbar ist.

20. Profilelement nach einem der vorhergehenden Ansprüche, dadurch gekennzeichnet, daß das Profilelement als sich über einen Winkel von 45° oder 90° erstreckendes Eckelement ausgebildet ist.
